(19) Europäisches Patentamt
European Patent Office
Office européen des brevets

(11) **EP 3 745 336 A1**

(12) **EUROPEAN PATENT APPLICATION**

(43) Date of publication:
**02.12.2020 Bulletin 2020/49**

(51) Int Cl.:
***G06Q 30/02*** *(2012.01)*

(21) Application number: **19176688.0**

(22) Date of filing: **27.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayerische Motoren Werke Aktiengesellschaft**
**80809 München (DE)**

(72) Inventors:
• **Tian, Jilei**
 **Chicago, IL Illinois 60605 (US)**
• **Hu, Wangsu**
 **Chicago, IL Illinois 60661 (US)**
• **Cao, Yang**
 **Chicago, IL Illinois 60601 (US)**

(54) **PLATFORM FOR EFFECTIVELY MANAGING USER'S MOBILITY, LOYALTY AND O2O RECOMMENDATION**

(57)  Providing a system (100) for generating reward points for users, it is an object of the present invention to increase user engagement. The object is achieved by the system (100) comprising:

a mobility reward platform (110) having at least one server;

at least one mobile device (120) communicative coupled to the mobility reward platform, wherein the mobile device (120) is carried by a user;

at least one vehicle associated with a corresponding mobile device;

a communication means of a reward supplier (130) communicative coupled to the mobility reward platform;

a communication means of a merchant (140) communicative coupled to the mobility reward platform;

wherein the system is adapted to:

a) generate a signal indicating user mobility based on at least one location sensor in the corresponding mobile device, and/or based on at least one location sensors in the vehicle;

b) forward the signal indicating mobility to the mobility reward platform;

c) based on the signal indicating mobility, generate a mobility index for the user; and

d) determine reward points based on the mobility index.

FIG 1

**Description**

The invention relates to a system, a method and a storage medium for influencing user behavior.

Most of the travel loyalty programs today are with airlines, e.g. Star Alliance and One World aim at engaging customers by mileage program. Shops have introduced membership programs to lock in consumers, e.g. Costco. In mobility, an app named "Miles" aims to establish a travel rewards platform that awards users points for various transportation mode. Points can be redeemed for rewards ranging from Amazon and Starbucks gift cards to free Silvercar rentals and discounts on HelloFresh meal kits.

The programs are limited within a business scope like an airline mileage program. This is a limitation since users have diversified lifestyle and different needs and the ability to influence user behavior is therefore limited in scope.

The inventors have realized that a successful loyalty program needs to keep and increase user engagement in order to successfully influence user behavior. In order to increase user engagement, a system is needed to reliably measure user engagement so that business is able to measure the return of investment and user is able to get attractive incentive that has to be at least relevant. The system might also be able adjust to changing user interest in order to adapt and entice increased user engagement. The system should both adapt to user interest, and be able to influence user behavior.

The deficiency is solved by the system of claim 1.

In particular, the deficiency is solved by a system, the system comprising:

a mobility reward platform having at least one server;
at least one mobile device communicative coupled to the mobility reward platform, wherein the mobile device is carried by a user;
a least one vehicle associated with a corresponding mobile device;
a communication means of a reward supplier communicative coupled to the mobility reward platform;
a communication means of a merchant communicative coupled to the mobility reward platform;
wherein the system is adapted to:

a) generate a signal indicating user mobility based on at least one location sensor in the corresponding mobile device, and/or based on at least one location sensors in the vehicle;
b) forward the signal indicating mobility to the mobility reward platform;
c) based on the signal indicating mobility, generate a mobility index for the user; and
d) determine reward points based on the mobility index.

The system improves long-term relations between users and reward suppliers allowing user behavior to be influenced in a broader scope. The system may increase value for reward suppliers, users, and merchants. The system may allow targeted promotion recommendations to improve the user attraction to the reward, optimal impression for 3rd parties to maximize return on investment, and empowers the user to engage with businesses, leading to better user profiling which enables new business opportunities.

The determined reward points may be transformed into or may be stored data representing an amount of a crypto currency.

User engagement can be determined by multiple factors, such as user's driving behavior, including vehicle usage and service engagement. Reward points can be used to influence user behavior.

An open ecosystem can help build a long-term relationship collaborating with the 3rd parties, not only enticing users for a single business and/or service, but also providing more value to consumers and better user profiling on broader area to enable new business models.

Even though users mostly have the same mobility behavior over time, it is a reasonable assumption that users may consider to smoothly adapt their mobility behavior if rewards are easy to achieve, e.g. charging efficiency, refueling brand loyalty, drive safety, etc. When user sees two adjacent gas stations, it is very easy to select one over another one if the incentive is available. If the incentive is attractive, this change/adaptation of mobility can be accelerated. The system is flexible and can adapt to change in user behavior.

To achieve attractive incentive, the user engagement platform includes a business-defined program, engagement measurement, and reward program. Engagement measurement is used to monitor the users' behavior and propose a user engagement score (reward points) to entice user to engage with the service.

An increased score indicates that the service is engaging users with the ecosystem, leading to a win-win situation. An unchanged or even decreased score might indicate that the reward program of the platform needs to be modified to enhance users' interaction.

The invention proposes a user engagement platform that can flexibly introduce the novel reward plan for a given business objective and empower it by introducing broader and diversified 3rd parties ecosystem with optimal performance using a machine learning approach.

Due to the lack of precise joint measure of user's interest and change, return of business, objective of business rewarding goal with expected user behavior, there is no effective and optimal data driven machine learning solution to optimize the system for user profiling, reward recommendation to improve the user attraction of the reward, optimal impression for the 3rd parties to maximize the return from the investment, and that empowers the user to engage with business leading to better user profiling and enables new business opportunity.

The user engagement can be measured from a service perspective, e.g. duration and/or frequency a user interacts with platform/service due to attractive features, such as features relating to refueling / charging / parking / sharing / preconditioning and other personal and contextual assistant. Longer and more frequent interaction results in more personalized attractive features, and in increased value of the service.

With proper user engagement measurement, the platform may offer the following benefits: For a vehicle producer (business/reward supplier), a better understanding of users' mobility intent and user's profile, such as, but not limited to lifestyle, behavior, interest, etc., as well as the consumer segmentation, may be extracted, making it possible to proactively make recommendations for products and/or services offered, and allowing predictions about users' interests and behaviors.

For the 3rd parties (merchants) in the ecosystem (engaging with the platform), benefits include improved experience from online to offline (O2O) and targeted ads, etc.

For the user, benefits include receiving incentive to engaging behavior as well as improved and personalized user experience (UX) of the platform.

The invention proposes a novel platform and algorithm to enable an ecosystem among business, users, and 3rd parties to influence user behavior.

In one embodiment, the system is further adapted to:

> receive a signal indicating the context of the user, e.g. the current location of the user;
> determine if the user is suitable for targeting promotions for a particular merchant, based on the signal indicating the current location of the user and based on stored data indicating a location of the particular merchant; and
> send, if the user is determined to be suitable for targeting promotions, a signal via the communication means of the merchant, the signal identifying the user as suitable for targeting promotions.

In one embodiment, the step of determining is further based on a correlation between data indicating user interest profile and data indicating categories of the particular merchant.

In one embodiment, the signal indicating user mobility is generated when a personal area network communication channel is established between the mobile device and the vehicle, and the vehicle is in motion.

In one embodiment, reward points for the user at time t+1 is calculated using the equation

$$S_{t+1} = \alpha \cdot S_t + \sum_{k=1}^{K}\left\{\beta_k \cdot g_k(F_{k,t})\right\}, \quad \text{where} \quad \sum_{k=1}^{K}\beta_k = C$$

and $g_k(F_k)$ is the user's mobility index for the k-th factor $F_k$, such as, but not limited to, mileage, digital service engagement, charging, driving efficiency, and flexibly defined depending on the business objective.

One way to measure user engagement is to measure users' trip data. How many miles a user drives a vehicle (such as, but not limited to a bicycle, a car or motorcycle) may be measure against targets, in absolute targets, or as a percentage of total mobility (i.e. relative to other means of transportation, such as walking, taking bus, taking train, flying, etc.). Hence, a target may be defined e.g. as 20% of the total weekly mobility activity is carried out driving the user's vehicle. Increasing driving can speed up the product life cycle and result in increased vehicle sales.

The engagement with the platform may further entice the user e.g. to increase driving mileage to speed up business circle for vehicle producers and/or engage the user in more interaction with other services, such as third party services offered by the platform.

In one embodiment, the user interest profile is generated based on locations visited by the user carrying the mobile device.

In one embodiment, the user interest profile at an initial time t is calculated using the equation:

$$r_{ij}(t) = h_{ij}(t)$$

and the user interest profile at subsequent time t + Δt is calculated using the equation:

$$r_{ij}(t + \Delta t) = \alpha \cdot h_{ij}(t) + (1 - \alpha) \cdot h_{ij}(t + \Delta t)$$
$$= \alpha \cdot r_{ij}(t) + (1 - \alpha) \cdot r_{ij}(\Delta t)$$

where $h_{ij}(t)$ at initial time t is the i-th user initial transaction/check-ins at location/area j; $h_{ij}(t + \Delta t)$ is the user i transaction/check-ins at location/area j between time t and time t + $\Delta$t; and $\alpha$ is a decay parameter.

In one embodiment, a particular user $u_i$ is determined be suitable for targeting promotion of a particular location I based on the user's current location (cl) and based on a probability function that includes a function of a distance between the particular user and the merchant, using the equation:

$$r_{il}(t) = \left\{ r_{ik}(t) \cdot c_{lk}^T \right\} \cdot P\left(l, cl \middle| u_i\right)$$

where $c_{lk}$ is a location-category profile, $P(l, cl \mid u_i)$ is a probability of user $u_i$ being interested in the location as a function of distance, given the current location of the user $cl$ and $r_{ik}(t)$ is a user-category profile.

In one embodiment, for at least one merchant, an engagement gain is derived using the equation:

$$G_j(t) = \sum_i h_{ij}(t),$$

if user i visits nearby merchant j and where j represent a particular merchant.

The problem is further solved by a method comprising:

a) generating a signal indicating user mobility based on at least one location sensor in a mobile device and/or based on at least one location sensors in the vehicle;
b) forwarding the signal indicating mobility to a mobility reward platform;
c) based on the signal indicating mobility, generating a mobility index for the user; and
d) determining reward points based on the mobility index;

wherein the method preferably is carried out by the system as disclosed herein.

The problem is further solved by a computer-readable medium comprising instructions which, when executed by an instruction executing system, such as the system disclosed herein, cause the system to carry out the steps of the method disclosed herein.

The benefits and advantages of the methods and the medium are equal or similar to the advantages of the above-mentioned system.

In the following, embodiments of the invention are described with respect to the figures, wherein

Fig. 1    shows a consumer engagement platform;
Fig. 2    shows a method according to the invention;
Fig. 3    shows an example of user transactions/check-ins;
Fig. 4    shows an example category hierarchy;
Fig. 5    shows user-location category based recommendation;
Fig. 6    shows a table including user-category profile and location category profile;
Fig. 7    shows user's previous transactions/check-ins, current recommendation, user's next transaction/check-ins and impression gain;
Fig. 8    shows incremental modal adaptation.

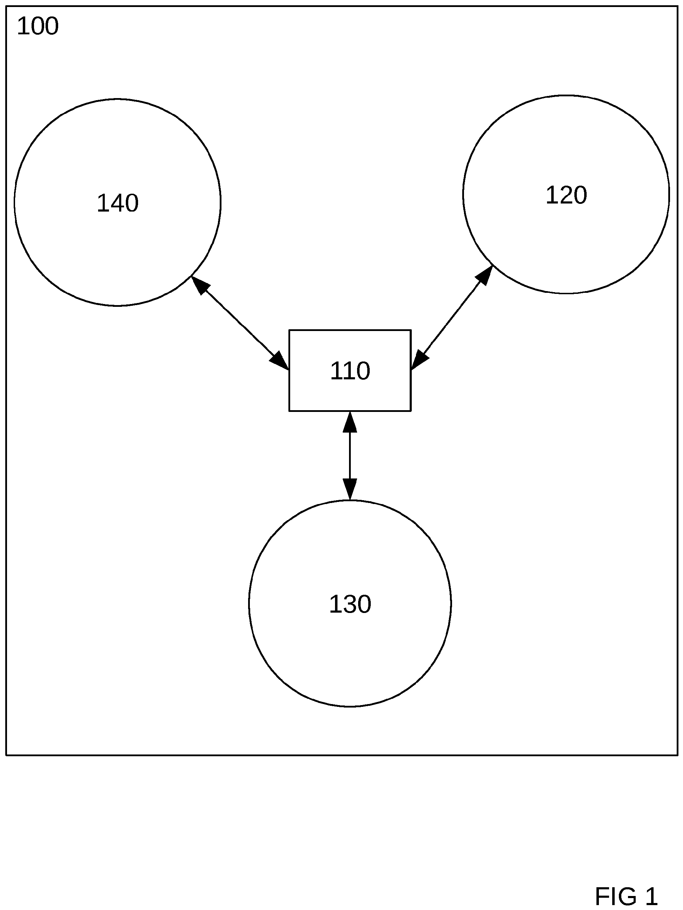

Fig. 1 shows an example of a system (100) according to the invention including a mobility reward platform (110), at least one mobile device (120) communicative coupled to the mobility reward platform (110), a communication means of a reward supplier (130) communicative coupled to the mobility reward platform (110), and a communication means of a merchant (140) communicative coupled to the mobility reward platform. The mobility reward platform (110) may have at least one server (not shown). The mobile device may be carried by a user (not shown). At least one vehicle (not shown) may be associated with a corresponding mobile device (120).

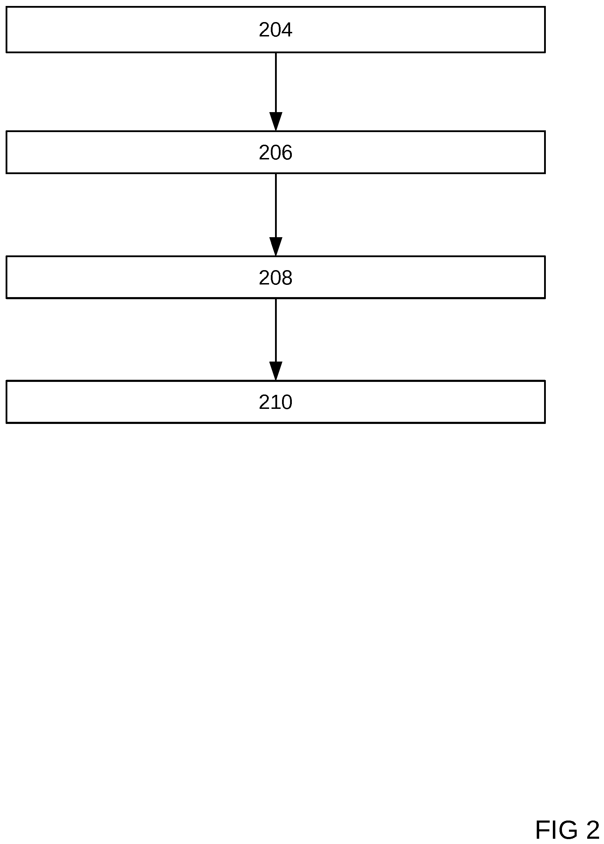

Fig. 2 shows an example of a method according to the invention, including: generate a signal indicating user mobility based on at least one location sensor in the corresponding mobile device, and/or based on at least one location sensors in the vehicle (204), forward the signal indicating mobility to the mobility reward platform (206), based on the signal indicating mobility, generate a mobility index for the user (208), and determine a reward points based on the mobility index (210).

Reward points (user engagement measure S for a user) may be derived for a time t+1:

$$S_{t+1} = \alpha \cdot S_t + \sum_{k=1}^{K}\left\{\beta_k \cdot g_k(F_{k,t})\right\}, \quad \text{where} \quad \sum_{k=1}^{K}\beta_k = C$$

and $g_k(F_k)$ measures the user's activity (mobility index) for kth factor $F_k$, e.g. mileage, digital service engagement, charging, driving efficiency, etc., flexibly defined depending on the business objective. The user engagement measure (may be or be translated into reward points) may be used by the user, e.g. to exchange for a gift card. Reward points may be translated into or be crypto currency.

As an example, to measure driving and connected service engagement, mileage may be used. Driving mileage can measure a user's driving activity and a duration of which the user has used the service.

$$g_k\left(F_{k,t} = D_t\right) = \left[D_t + f(D_t) \cdot \frac{D_t}{TD_t}\right]$$

where

$$f(x) = \frac{1}{N} \cdot x, \text{ or } f(x) = x^{\frac{1}{N}} \approx \sqrt{x}$$

$D_i$ is the weekly driving mileage at the i-th week (using a vehicle) or smoothed daily driving mileage;
$TD_i$ is the weekly total mobility mileage (i.e. such as including all means of transportation) at the week i or smoothed daily driving mileage;

User analytics is introduced to measure user's activity for the service, which may include new features like smart preconditioning (e.g. a number of activities a user has engaged).

The platform may be used to optimize value for reward supplier (vehicle producer), 3rd party merchants, and for consumers.

Encouraging longer and more frequent driving increases vehicle turnover and vehicle service requirement, increasing sales for vehicle manufacture. Third party merchants increases value by increased consumer visits and sales. Consumers' (vehicle owner) value increases by receiving reward on mileage, product and/or services purchases. The platform may further recommend rewards from merchants relevant to a specific user.

After defining the measurable value, the value may be optimized for all parties by using smart measures and smart recommendations. This may be done by defining an objective function for optimization.

Data is collected by collecting location data from users and by looking at the "merchant geo-fence" of frequently visited check-ins/transactions/locations/areas and how these change over time for the user.

The user's interest can be measured by user's transactions or by check-in frequencies for a given store.

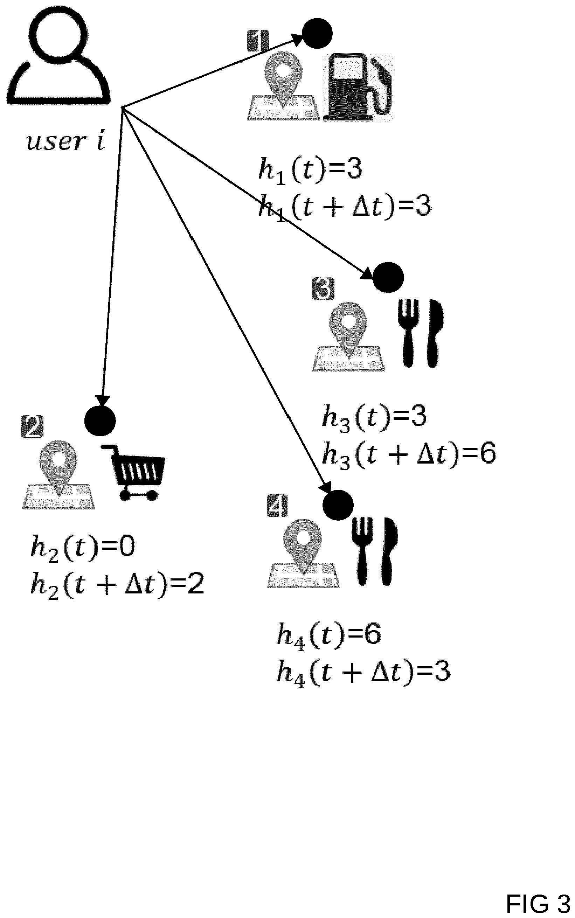

As is shown in Fig. 3, the *i*-th user has transaction/check-ins $h_j$ for *j*-th stores that belongs to category $c_k$. This may be described:

$$h_j \in H_1^M, \text{ and } c_k \in C_1^K$$

For time *t* and for time *t* + Δ*t*, a users' interest may be defined:

$$r_{ij}(t) = h_{ij}(t)$$

$$r_{ij}(t + \Delta t) = \alpha \cdot h_{ij}(t) + (1 - \alpha) \cdot h_{ij}(t + \Delta t)$$
$$= \alpha \cdot r_{ij}(t) + (1 - \alpha) \cdot r_{ij}(\Delta t)$$

respectively. Thus the change of the user's interest between time t and t+Δt may be:

$$\Delta r_{ij}(t) = r_{ij}(t + \Delta t) - r_{ij}(t)$$
$$= \alpha \cdot r_{ij}(t) + (1 - \alpha) \cdot r_{ij}(\Delta t) - r_{ij}(t)$$
$$= (1 - \alpha) \cdot \left[r_{ij}(\Delta t) - r_{ij}(t)\right]$$

where $\Delta t$ may be set to weekly or monthly evaluation, or any other suitable period as the case may be. For the $i$-th user $u_i$ for the $j$-th stores, the user's interest change at time $t$ for a target period of $\Delta t$ can be measured.

The transaction/check-ins may also be grouped by category $c_k$. Change for a given period of $\Delta t$ since offering at time t may then be.

$$\Delta r_{ik} = (1 - \alpha) \cdot \left[r_{ij}(\Delta t) - r_{ij}(t)\right], \text{ if and only if } C(h_j) = c_k$$

Recommendations and user profiling are formulated as follows. For the data collected data during $t$ to $t + \Delta t$, the data is split into a training set and test set, such as, but not limited to 80% training set and 20% test set for cross validation.

The test set may be used to find an optimal $\alpha$ that minimize the rating prediction error between estimated $\hat{r}_{ij}(t + \Delta t)$ against the ground truth $r_{ij}(t + \Delta t)$.

$$\alpha = \underbrace{argmin}_{\alpha} \left\| \hat{r}_{ij}(t + \Delta t) - r_{ij}(t + \Delta t) \right\|$$

where:

$$\hat{r}_{ij}(t + \Delta t) = \alpha \cdot \left[ \vec{u}_i(t) \cdot \vec{h}_j^T(t) \right] + (1 - \alpha) \cdot \left[ \vec{u}_i(\Delta t) \cdot \vec{h}_j^T(\Delta t) \right]$$
$$= \alpha \cdot \hat{r}_{ij}(t) + (1 - \alpha) \cdot \hat{r}_{ij}(\Delta t)$$

Once $\alpha$ is estimated, the model can be updated. The process can be repeated for each time at $t$, $t + \Delta t$, $t + 2 \cdot \Delta t$, $t + 3 \cdot \Delta t$, ......

Data sparsity may be handled using backoff smoothing. Gifts may be from stores that are location based, thus sparse. Stores are classified into the hierarchical category, e.g. (Starbucks, coffee, Restaurant). For rating or preference estimation, the backoff method, commonly used in the language modeling, is introduced.

$$\hat{r}_{ij}(\text{Starbuck}) =$$

$$\begin{cases} P_{ij}(\text{"Starbuck"}), \; if \; u_i \; has \; interacted \; g_j \; from \; \text{"Starbuck"}, \\ \beta(\text{"Starbuck"}) \cdot P_{ij}(\text{"Coffee"}), \; if \, u_i \; has \; interacted \; g_j \; from \; category \; of \; \text{"Coffee"}, \\ \beta(\text{"Starbuck, Coffee"}) \cdot P_{ij}(\text{"Restaurant"}), \; if \, u_i \; has \; interacted \; g_j \; from \; category \; of \; \text{"Restaurant"}, \\ \qquad \qquad \cdots \end{cases}$$

where $\beta$ is normalization factor, so that $\sum P_{ij}(\text{"Starbuck"}) = 1$

Further description of backup smoothing may be found at http://www.cs.cornell.edu/courses/cs4740/2014sp/lectures/ smoothing+backoff.pdf.

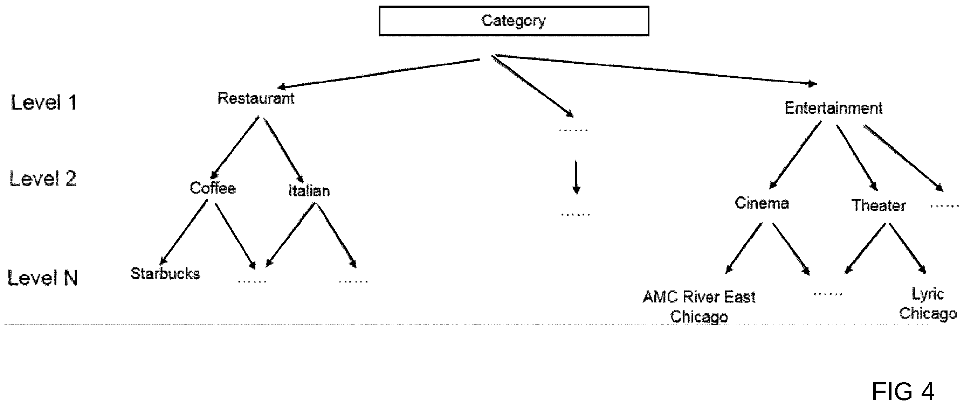

Such category hierarchy, where all instance or leaves have coordinates (such as GPS locations), is shown in Fig. 4.

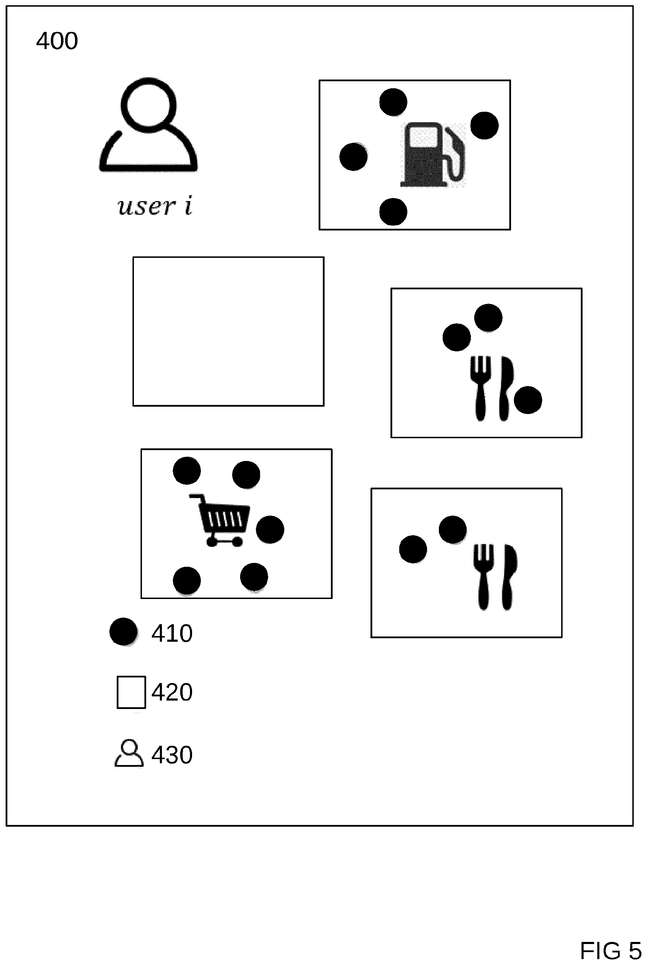

Based on user-category profile, a user-location preference matrix may be generated as follows (with reference to Fig. 5).

A users' transaction or check-ins observations can be used to establish the initial user-category profile $r_{ik}(t)$. After combining the user-category profile with the location-category profile $c_{lk}$, a user-location preference matrix may be derived as:

$$r_{il}(t) = \left\{ r_{ik}(t) \cdot c_{lk}^T \right\} \cdot P\left(l, \, cl \middle| u_i\right)$$

$P(l, cl \mid u_i)$ denotes the location ($l$) relevancy for user $u_i$ being at current location $cl$. The probability P may be a function of the distance between the location and the current location of the user.

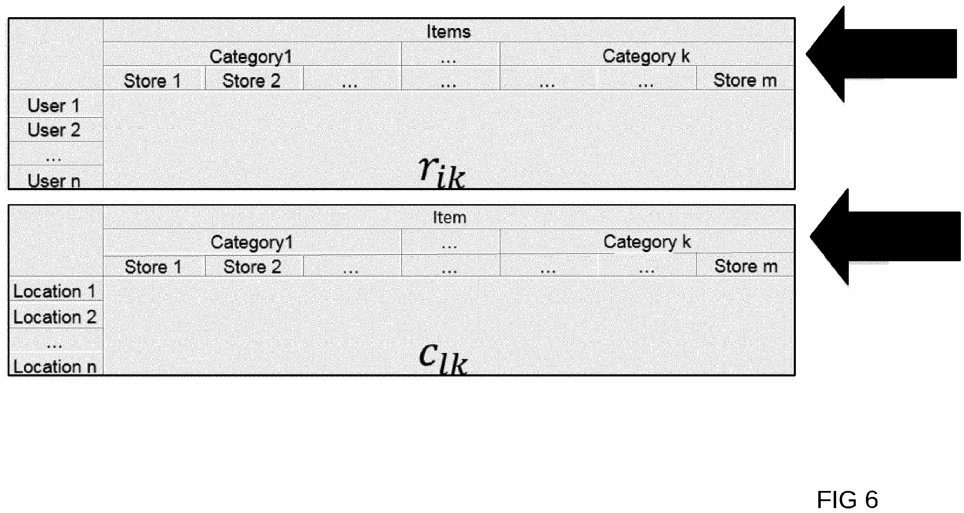

Then user-location-category recommendation can be applied by the latent factor, e.g. by matrix factorization. Rating may be estimated as (see Fig. 6):

$$\hat{r}_{il}(t) = \vec{u}_i(t) \cdot \vec{v}_l^T$$

Example and implementation code for matrix factorization can be found at http://www.albertauyeung.com/post/python-matrix-factorization.

Fig. 5 shows an example of user-location-category based recommendation 400, including user's current location 430 ($cl$), users' previous transaction or check-ins 410, and personal location profile 420. The overlap of 410 and 420 is the personal location-category profile.

Fig. 6 show a table including a user-category profile $r_{ik}$ and location-category profile $c_{lk}$.

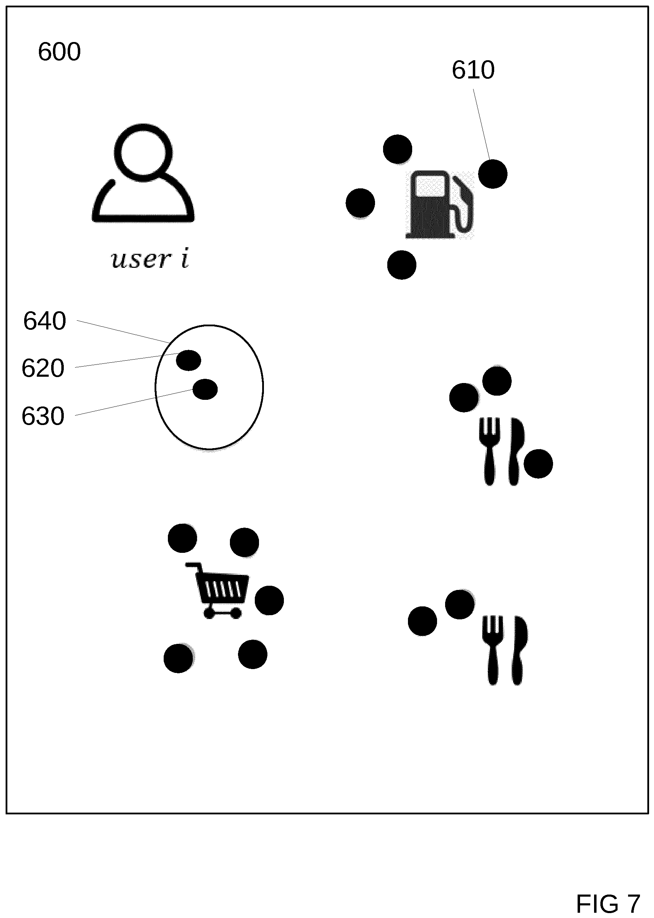

Based on user profile $\vec{u}_i(t)$, over the store, category and location, as seen in Fig. 7, reward can be recommended (1) by matching user's preference and frequent visited location and by (2) maximizing merchant return from its reward investment. Fig. 7 shows a reference implementation 600, including user's previous transaction or check-ins 610, current recommendation 620, user's next transaction or check-ins 630, and impression gain 640.

User engagement gain may be estimated by follow-up transaction or impression by locations visited. For the j-th merchant, user engagement gain may be derived from the equation:

$$G_j(t) = \sum_i h_{ij}(t),$$

if i-th user visits nearby j-th merchant.

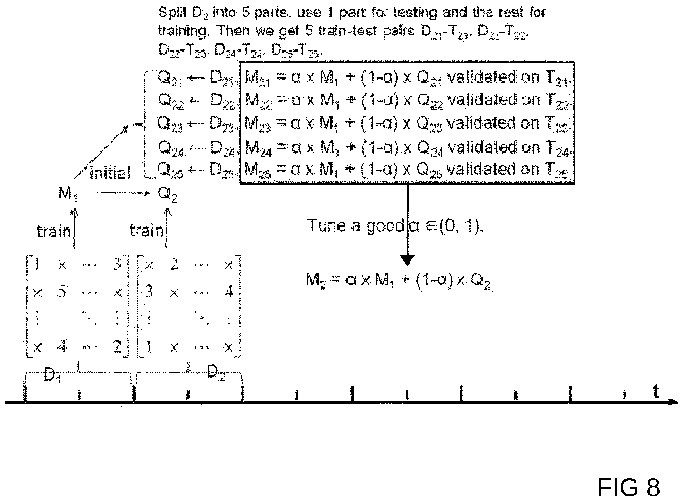

Fig. 8 shows incremental modal adaptation. History data needs to be processed in the sequential manner. For, example, the data may be consisting of the following sub data set.

$$D_1, D_2, \ldots\ldots, D_{t-1}, D_t, \ldots\ldots D_N$$

$D_t$ includes the data collected during the time period between (t-1) and (t). Firstly sub data set $D_1$ is used to train Matrix Factorization (MF) model, denoted here as $M_1$.

Then, $M_1$ is used for generating recommendations during period between t and t+1. At the time t+1 the model is updated as shown in Fig. 8. The process is repeated iteratively.

At time t, the historical model at time (t-1), $M_{t-1}$ is used to train model $M_t$ using sub data set collected between time t-1 and time t (Dt). The model is then updated using the following equation:

$$M_t = a \times M_{t-1} + (1-a) \times Q_t;$$

This equation is used as iterative model adaptation.

Since only the latest sub data set $D_t$ needs to be stored at time t, instead of saving entire history data from time 1 to time t ($D_1$ to $D_t$), the data storage saving is dramatic, also leading to a significant computational complexity reduction.

The model adaptation algorithm above is optimized to minimize the prediction error for the latest data meaning it effectively follows users' change of interests.

**Claims**

1. A system (100), the system (100) comprising:

a mobility reward platform (110) having at least one server;
at least one mobile device (120) communicative coupled to the mobility reward platform, wherein the mobile device (120) is carried by a user;
at least one vehicle associated with a corresponding mobile device;
a communication means of a reward supplier (130) communicative coupled to the mobility reward platform;

a communication means of a merchant (140) communicative coupled to the mobility reward platform;
wherein the system is adapted to:

a) generate a signal indicating user mobility based on at least one location sensor in the corresponding mobile device, and/or based on at least one location sensors in the vehicle;
b) forward the signal indicating mobility to the mobility reward platform;
c) based on the signal indicating mobility, generate a mobility index for the user; and
d) determine reward points based on the mobility index.

2. The system of claim 1,
wherein the system is further adapted to:

receive a signal indicating the current location of the user;
determine if the user is suitable for targeting promotions for a particular merchant, based on the signal indicating the current location of the user and based on stored data indicating a location of the particular merchant; and
send, if the user is determined to be suitable for targeting promotions, a signal via the communication means of the merchant, the signal identifying the user as suitable for targeting promotions.

3. The system of claim 2 or claim 2,
wherein the step of determining is further based on a correlation between data indicating user interest profile and data indicating categories of the particular merchant.

4. The system of any of the previous claims,
wherein the signal indicating user mobility is generated when a personal area network communication channel is established between the mobile device and the vehicle, and the vehicle is in motion.

5. The system of any of the previous claims,
wherein reward points for the user at time t+1 is calculated using the equation

$$S_{t+1} = \alpha \cdot S_t + \sum_{k=1}^{K} \left\{ \beta_k \cdot g_k(F_{k,t}) \right\}, \quad \text{where} \quad \sum_{k=1}^{K} \beta_k = C$$

and $g_k(F_k)$ is the user's mobility index for the k-th factor $F_k$, such as, but not limited to, mileage, digital service engagement, charging, driving efficiency, flexibly.

6. The system of any of the previous claims,
wherein the user interest profile is generated based on locations visited by the user carrying the mobile device.

7. The system of claim 6,
wherein the user interest profile at an initial time t is calculated using the equation:

$$r_{ij}(t) = h_{ij}(t)$$

and the user interest profile at subsequent time t + ∆t is calculated using the equation:

$$r_{ij}(t + \Delta t) = \alpha \cdot h_{ij}(t) + (1 - \alpha) \cdot h_{ij}(t + \Delta t)$$
$$= \alpha \cdot r_{ij}(t) + (1 - \alpha) \cdot r_{ij}(\Delta t)$$

where $h_{ij}(t)$ at initial time t is the i-th user initial transaction/check-ins at location/area j; $h_{ij}(t + \Delta t)$ is the user i transaction/check-ins at location/area j between time t and time t + ∆t; and $\alpha$ is a decay parameter.

8. The system of any of the previous claims,
wherein a particular user $u_i$ is determined be suitable for targeting promotion of a particular location I based on the user's current location (cl) and based on a probability function that includes a function of a distance between the particular user and the merchant, using the equation:

$$r_{il}(t) = \left\{ r_{ik}(t) \cdot c_{lk}^{T} \right\} \cdot P\left( l,\, cl \middle| u_i \right)$$

where $c_{lk}$ is a location-category profile, $P(l,\, cl \mid u_i)$ is a probability of user $u_i$ being interested in the location as a function of distance, given the current location of the user $cl$ and $r_{ik}(t)$ is a user-category profile.

9. The system of any of the previous claims,
   wherein for at least one merchant, an engagement gain is derived using the equation:

$$G_j(t) = \sum_i h_{ij}(t),$$

if user i visits near merchant j and where j represent a particular merchant.

10. A method comprising:

   a) generating a signal indicating user mobility based on at least one location sensor in a mobile device and/or based on at least one location sensors in the vehicle;
   b) forwarding the signal indicating mobility to a mobility reward platform;
   c) based on the signal indicating mobility, generating a mobility index for the user; and
   d) determining reward points based on the mobility index;

   wherein the method preferably is carried out by the system of any of the previous claims.

11. A computer-readable medium comprising instructions which, when executed by an instruction executing system, such as the system of any of the claims 1 to 9, cause the system to carry out the steps of the method of claim 10.

FIG 1

```
┌─────────────────────────────────────────────┐
│                    204                        │
└─────────────────────────────────────────────┘
                       │
                       ▼
┌─────────────────────────────────────────────┐
│                    206                        │
└─────────────────────────────────────────────┘
                       │
                       ▼
┌─────────────────────────────────────────────┐
│                    208                        │
└─────────────────────────────────────────────┘
                       │
                       ▼
┌─────────────────────────────────────────────┐
│                    210                        │
└─────────────────────────────────────────────┘
```

FIG 2

$$h_1(t)=3$$
$$h_1(t + \Delta t)=3$$

$$h_3(t)=3$$
$$h_3(t + \Delta t)=6$$

$$h_2(t)=0$$
$$h_2(t + \Delta t)=2$$

$$h_4(t)=6$$
$$h_4(t + \Delta t)=3$$

user i

FIG 3

Category

Level 1 — Restaurant ...... Entertainment

Level 2 — Coffee Italian Cinema Theater ......

Level N — Starbucks ...... ...... AMC River East Chicago ...... Lyric Chicago

FIG 4

FIG 5

EP 3 745 336 A1

| Items | | | | | | | |
|---|---|---|---|---|---|---|---|
| | Category1 | | | ... | | Category k | |
| | Store 1 | Store 2 | ... | ... | ... | ... | Store m |
| User 1 | | | | | | | |
| User 2 | | | | | | | |
| ... | | | | $r_{ik}$ | | | |
| User n | | | | | | | |

| Item | | | | | | | |
|---|---|---|---|---|---|---|---|
| | Category1 | | | ... | | Category k | |
| | Store 1 | Store 2 | ... | ... | ... | ... | Store m |
| Location 1 | | | | | | | |
| Location 2 | | | | | | | |
| ... | | | | $c_{lk}$ | | | |
| Location n | | | | | | | |

FIG 6

FIG 7

Split $D_2$ into 5 parts, use 1 part for testing and the rest for training. Then we get 5 train-test pairs $D_{21}$-$T_{21}$, $D_{22}$-$T_{22}$, $D_{23}$-$T_{23}$, $D_{24}$-$T_{24}$, $D_{25}$-$T_{25}$.

$Q_{21} \leftarrow D_{21}$, $\quad$ $M_{21} = \alpha \times M_1 + (1-\alpha) \times Q_{21}$ validated on $T_{21}$.

$Q_{22} \leftarrow D_{22}$, $\quad$ $M_{22} = \alpha \times M_1 + (1-\alpha) \times Q_{22}$ validated on $T_{22}$.

$Q_{23} \leftarrow D_{23}$, $\quad$ $M_{23} = \alpha \times M_1 + (1-\alpha) \times Q_{23}$ validated on $T_{23}$.

$Q_{24} \leftarrow D_{24}$, $\quad$ $M_{24} = \alpha \times M_1 + (1-\alpha) \times Q_{24}$ validated on $T_{24}$.

$Q_{25} \leftarrow D_{25}$, $\quad$ $M_{25} = \alpha \times M_1 + (1-\alpha) \times Q_{25}$ validated on $T_{25}$.

initial

$M_1 \longrightarrow Q_2$

train $\quad$ train

Tune a good $\alpha \in (0, 1)$.

$$M_2 = \alpha \times M_1 + (1-\alpha) \times Q_2$$

$$\begin{bmatrix} 1 & \times & \cdots & 3 \\ \times & 5 & \cdots & \times \\ \vdots & & \ddots & \vdots \\ \times & 4 & \cdots & 2 \end{bmatrix} \begin{bmatrix} \times & 2 & \cdots & \times \\ 3 & \times & \cdots & 4 \\ \vdots & & \ddots & \vdots \\ 1 & \times & \cdots & \times \end{bmatrix}$$

$D_1$ $\qquad$ $D_2$

$t$

FIG 8

Europäisches
Patentamt

European
Patent Office

Office européen
des brevets

# EUROPEAN SEARCH REPORT

Application Number

EP 19 17 6688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/078918 A1 (PAPINEAU MICHAEL [US]; FELTHAM MARK [US]) 25 April 2019 (2019-04-25) * abstract * * page 1, line 19 - line 32 * * page 3, line 25 - page 13, line 2 * * figures 1-4 * | 1-11 | INV. G06Q30/02 |
| X | US 2015/118652 A1 (LAWRENSON MATTHEW JOHN [CH] ET AL) 30 April 2015 (2015-04-30) * abstract * * paragraph [0001] - paragraph [0047] * * paragraph [0060] - paragraph [0160] * * figures 1-6 * | 1-11 | |
| X | US 2013/197973 A1 (LIU YIMIN [US] ET AL) 1 August 2013 (2013-08-01) * abstract * * paragraph [0001] - paragraph [0008] * * paragraph [0014] - paragraph [0053] * * figures 1-5 * | 1-11 | |
| | | | TECHNICAL FIELDS SEARCHED (IPC) G06Q |

The present search report has been drawn up for all claims

| Place of search | Date of completion of the search | Examiner |
|---|---|---|
| The Hague | 12 September 2019 | Bassanini, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 17 6688

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2019

| Patent document cited in search report | | Publication date | Patent family member(s) | | Publication date |
|---|---|---|---|---|---|
| WO 2019078918 | A1 | 25-04-2019 | US 10354458 B1<br>WO 2019078918 A1 | | 16-07-2019<br>25-04-2019 |
| US 2015118652 | A1 | 30-04-2015 | US 2015118652 A1<br>WO 2015062635 A1 | | 30-04-2015<br>07-05-2015 |
| US 2013197973 | A1 | 01-08-2013 | CN 103226776 A<br>DE 102013201260 A1<br>US 2013197973 A1 | | 31-07-2013<br>01-08-2013<br>01-08-2013 |

EPO FORM P0459

For more details about this annex : see Official Journal of the European Patent Office, No. 12/82